# EUROPÄISCHE PATENTSCHRIFT

(11) **EP 1 416 211 B1**
(45) Veröffentlichungstag und Bekanntmachung des Hinweises auf die Patenterteilung: **24.05.2006**
(21) Anmeldenummer: 03022734.2
(22) Anmeldetag: 09.10.2003
(51) Int. Cl.: F16L 19/10

(54) **Rohrverbindung**
Tube coupling
Raccord de tuyau

(30) Priorität: 31.10.2002 DE 10251204
(43) Veröffentlichungstag der Anmeldung: 06.05.2004
(73) Patentinhaber: Eifeler Maschinenbau GmbH, 53881 Euskirchen (DE)
(72) Erfinder: Dahlen, Jürgen, 53879 Euskirchen (DE); Schorn-Gilson, Alfons, 53913 Swisttal (DE)
(74) Vertreter: Bauer, Dirk

(56) Entgegenhaltungen:
- EP-A- 0 581 678
- AU-B- 526 623
- DE-A- 2 847 597
- DE-A- 4 219 722
- GB-A- 578 507
- US-A- 2 466 057
- US-A- 2 640 716

## Beschreibung

Die Erfindung betrifft eine Rohrverbindung mit einem rohrförmigen Schneidelement und einem auf diesem verschiebbaren Zentrierring, wobei der Schneidring auf ein Rohrende aufschiebbar, mittels des Zentrierrings in einer Überwurfmutter zentrierbar und durch Anziehen der Überwurfmutter derart an einem Aufnahmekörper montierbar ist, dass dieser mit dem Rohrende druckfest verbunden ist und wobei der Schneidring und die Überwurfmutter konische Klemmflächen, die im montierten Zustand in Kontakt stehen und der Aufnahmekörper eine konische Dichtfläche aufweist. Unter Rohrende soll im Rahmen dieser Anmeldung auch ein röhrförmiges Stutzenende oder ein Verschlußstopfen verstanden werden.

Ein solche Rohrverbindung ist beispielsweise offenbart in der DE 4038539 C1. Bei ihrer Montage wird zuerst eine Überwurfmutter und dann der zweiteilige Schneidring auf ein Rohrende aufgeschoben. Das Rohrende wird dann in einen Aufnahmekörper eingeführt und Schneidelement und Zentrierring werden mit der Überwurfmutter in Richtung des Rohrendes geschoben, bis die Überwurfmutter den Aufnahmekörper berührt. In diesem zusammengeschobenen Zustand - also unmittelbar vor dem Anziehen der Überwurfmutter - überdeckt ein kleiner Bereich des Zentrierrings das Ende des Schneidelements. Der Zentrierring ist beim Fügen in der dem Rohrende zugewandten Hälfte der Überwurfmutter angeordnet, zentriert das Schneidelement in der Überwurfmutter und stabilisiert diese gegen Verkanten.

Durch Anziehen der Überwurfmutter wird die Rohrverbindung über einen Zwischenzustand ("gefügter Zustand") in den Betriebszustand überführt. Im gefügten Zustand greift der vordere Abschnitt des Zentrierrings mit seiner Elastomerdichtung in die konische Dichtfläche des Aufnahmekörpers ein. Der in der DE 40 38 539 C1 vorgeschlagene Zentrierring weist in Richtung des Rohrendes eine Elastomerdichtung auf, die im gefügten Zustand nur auf einer kurzen axialen Länge an der konischen Dichtfläche des Aufnahmekörpers anliegt. Beim Anziehen der Überwurfmutter wird einerseits diese Elastomerdichtung in den Dichtkonus des Aufnahmekörpers, andererseits das vordere Teil des Schneidelements unter eine gleichfalls konische Dichtfläche des Zentrierrings gepresst. Der Zentrierring ist hierbei einzig an diesen konischen Flächen und damit systembedingt weder in axialer noch in radialer Richtung eindeutig geführt. Entsprechend - und dies bestätigt die Erfahrung - neigt der in der DE 40 38 539 C1 vorgeschlagene Zentrierring beim Anziehen der Überwurfmutter gerade bei mittleren und großen Rohrdurchmessern zum Verkanten. So kann die Elastomerdichtung zwischen den Kanten des Aufnahmekörpers und des Zentrierrings geraten und unter ungünstigen Umständen sogar teilweise abgeschert werden. Ein solches Verkanten des Zentrierrings ist höchst unerwünscht, da sich die montierte Rohrverbindung durch eine signifikant verringerte Dichtigkeit bis hin zum Totalausfall auszeichnen kann, ohne dass dieser Umstand bei der Montage der vorgeschlagenen Rohrverbindung für den Monteur erkennbar ist.

Darüber hinaus wird die Dichtigkeit der in der DE 40 38 539 C1 vorgeschlagenen Rohrverbindung im Wesentlichen durch die an der konischen Dichtfläche des Aufnahmekörpers anliegende Elastomerdichtung des Zentrierrings gewährleistet. Aufgrund der von der Mantelfläche des Rohrendes ausgehenden Fuge zwischen Zentrierring und Schneidelement trägt das hinter dieser Fuge angeordnete Schneidelement nur noch zur mechanischen Stabilisierung der Überwurfmutter und des Rohres, nicht aber zur Abdichtung der Rohrverbindung bei. Die bei einer klassischen Schneidringverbindung eigentlich erwünschte Verstärkung der Dichtwirkung durch den formschlüssigen Eingriff des Schneidrings in das Rohrende ist damit in der Rohrverbindung nach der DE 40 38 539 C1 außer Kraft gesetzt.

Zur Vereinfachung der Montage einer Rohrverbindung werden Schneidringgarnituren mit einem in eine Überwurfmutter eingesetzten Schneidring angeboten, wobei die Schneidringgarnitur auf ein Rohrende aufschiebbar und durch Anziehen der Überwurfmutter derart an einem Aufnahmekörper montierbar ist, dass dieser mit dem Rohrende druckfest verbunden ist. Eine derartige Schneidringgarnitur unter Verwendung des bereits beschriebenen Schneidrings ist gleichfalls in der DE 40 38 539 C1 als "Funktionsmutter" beschrieben.

Mittels eines Schneidrings, einer Überwurfmutter und eines Aufnahmekörpers kann in der beispielsweise in der DE 40 38 539 C1 beschriebenen Weise eine Rohrverbindung hergestellt werden, wobei der Schneidring auf ein Rohrende aufgeschoben und durch Anziehen der Überwurfmutter derart an dem Aufnahmekörper montiert ist, dass dieser mit dem Rohrende druckfest verbunden ist.

### Aufgabe

Der Erfindung liegt die Aufgabe zugrunde, eine dichte Rohrverbindung vorzuschlagen, die eine sichere Montage erleichtert, indem sie insbesondere unter Verwendung genormter Aufnahmekörper und Überwurfmuttern die Ausrichtung der Überwurfmutter verbessert und die ein Verkanten von Elementen der Rohrverbindung vermeidet.

### Lösung

Ausgehend von der bekannten Rohrverbindung wird diese Aufgabe nach der Erfindung dahingehend gelöst, dass das Schneidelement sowohl bereits im gefügten als auch im montierten Zustand an der konischen Dichtfläche des Aufnahmekörpers anliegen kann. Da das Schneidelement durch den Zentrierring hindurchgeführt ist, kann es eine große axiale Länge besitzen und damit eine gute Zentrierfunktion für das Rohr ausüben. Damit übernimmt zunächst auch das Schneidelement die Dichtfunktion an der Mantelfläche des Rohrendes. Der Zentrierring steht im Vergleich mit der bekannten Rohrverbindung nicht in unmittelbarem Kontakt mit dem Rohrende, sondern wird auf einer äußeren Mantelfläche des Schneidelements verschiebbar geführt.

Bei der Montage der Rohrverbindung steht der Zentrierring radial in Kontakt mit einer äußeren Mantelfläche des Schneidelements und einer inneren Mantelfläche (Spitzen der Gewindegänge) der Überwurfmutter. Die axiale Führung ist durch eine kreisringförmige Anschlagfläche am Aufnahmekörper und - im Betriebszustand - eine kreisringförmige Anschlagfläche am Schneidelement gewährleistet. Ein unbemerktes Verkanten von Schneidring, Rohrende, Aufnahmekörper und Überwurfmutter ist durch die so erreichte eindeutige radiale wie axiale Führung praktisch ausgeschlossen.

ln einer bevorzugten Ausführungsform der erfindungsgemäßen Rohrverbindung weist der Teil der außere Mantelfläche des Schneidelements, auf der der Zentrierring verschoben wird, einen konstanten Durchmesser auf. Bei der Montage der Rohrverbindung wirkt der Verschiebung des Zentrierrings auf der äußeren Mantelfläche des Schneidelements dann eine im Wesentlichen konstante Reibkraft entgegen. Erst wenn der Zentrierring an den beiden kreisringförmigen Anschlagflächen des Aufnahmekörpers und des Schneidelements anliegt - die Rohrverbindung also "auf Block liegt" - steigt der Widerstand gegen eine weitere Verschiebung und damit das Drehmoment beim Anziehen der Überwurfmutter sprunghaft an. Bei Verwendung des beschriebenen Schneidrings kann dann mit einem definierten Anzugsmoment einerseits eine definierte Dichtwirkung der Rohrverbindung, andererseits ein wirksamer Schutz gegen eine Zerstörung der Gewinde durch versehentliches "Überdrehen" der Überwurfmutter erreicht werden.

Besonders bevorzugt übersteigt der größte Durchmesser des Zentrierrings des Schneidrings den größten Durchmesser des Schneidelements. Dann liegt keine Fläche des Schneidelements an dem Gewinde in der Überwurfmutter an. Der Schneidring wird dann einzig durch den Zentrierring in der Überwurfmutter zentriert, wodurch wiederum ein Verkanten dieser Elemente wirksam vermieden werden kann.

Die äußere Mantelfläche des Zentrierrings des Schneidrings weist vorteilhafter Weise eine Gummierung auf, die insbesondere mit einer Anzahl radial nach außen vorstehender Noppen versehen sein kann. Die vergleichsweise empfindlichen Gewindegänge in der Überwurfmutter werden durch das Verschieben des Zentrierrings während der Montage dann nicht beeinträchtigt. Die Noppen, die bevorzugt in Gewindegänge eingreifen, stabilisieren zusätzlich den Zentrierring in seiner jeweiligen Position in der Überwurfmutter.

Unter wirtschaftlichen Aspekten ist eine Ausführung des Schneidrings als besonders vorteilhaft anzusehen, die mit einem normgerechten Aufnahmekörper und einer normgerechten Überwurfmutter verwendbar ist. Einerseits ist der Schneidring dann mit einer Vielzahl am Markt erhältlicher Aufnahmekörper und Überwurfmuttern verwendbar, andererseits ist auch Aufwand zur bedarfsweisen Anfertigung von Aufnahmekörpern oder Überwurfmuttern in speziellen Ausführungen reduziert, da Werkzeuge zur Herstellung der normgerechten Anschlüsse vielfach bei den Verwendern bereits vorhanden sind.

### Ausführungsbeispiele

Zur Erläuterung der Erfindung ist nachfolgend in schematischen Darstellungen ein Ausführungsbeispiel dargestellt. Es zeigen
- Fig. 1: eine Schneidringgarnitur mit einer erfindungsgemäßen Rohrverbindung
- Fig. 2: eine Rohrverbindung mit diesem Schneidring beim Zusammenfügen,
- Fig. 3: diese Rohrverbindung im gefügten Zustand,
- Fig. 4: diese Rohrverbindung im Betriebszustand,
- Fig. 5: den Zentrierring aus dieser Rohrverbindung in einem Halbschnitt und
- Fig. 6: diesen Zentrierring in einer Vorderansicht

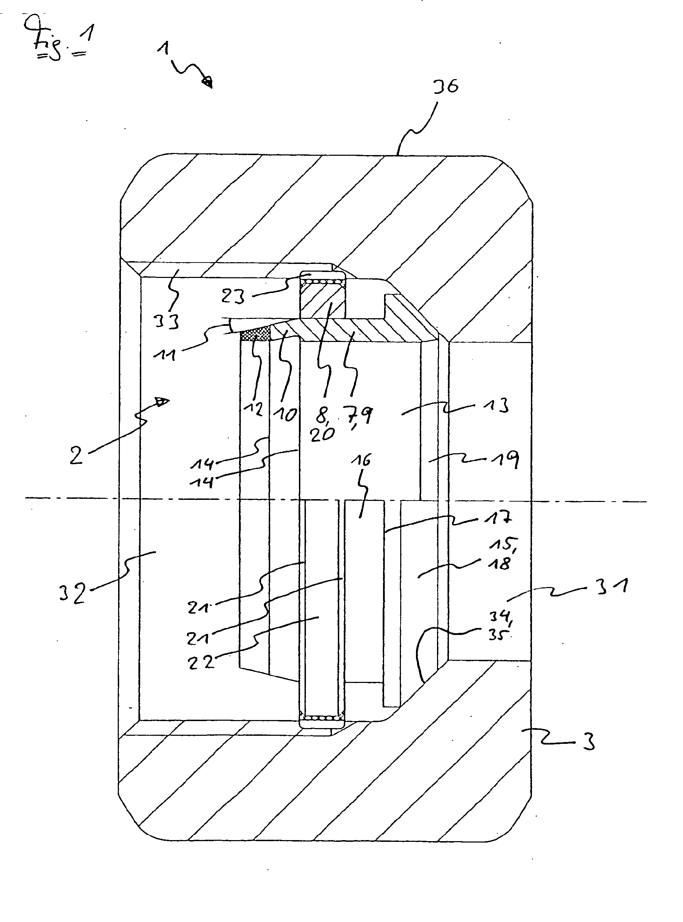

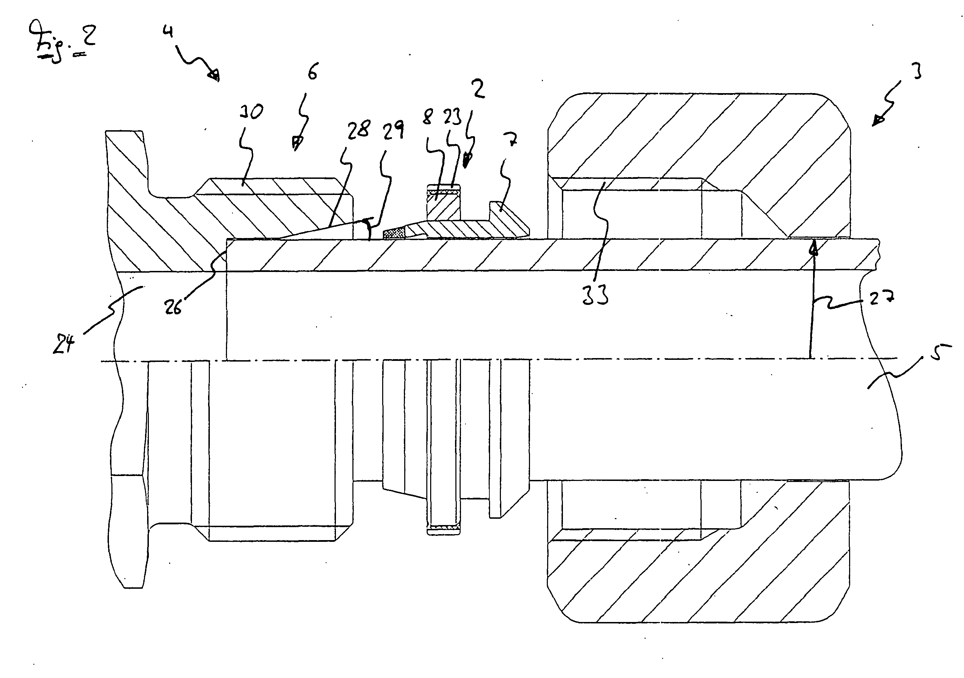

Figur 1 zeigt eine Schneidringgarnitur 1 mit einem Schneidring 2, der in einer Überwurfmutter 3 eingesetzt und gehalten ist. Figur 2 zeigt eine zur Montage vorbereitete Rohrverbindung 4, wobei Schneidring 2 und Überwurfmutter 3 aus der Schneidringgarnitur 1 hier zur Verdeutlichung getrennt dargestellt sind. Schneidring 2 und Überwurfmutter 3 sind auf ein Rohrende 5 aufgeschoben, das in einen Aufnahmekörper 6 eingesetzt ist. Dies entspricht zugleich dem vorgefügten Zustand, wenn Schneidring 2 und Überwurfmutter 3 als getrennte Bauteile - nicht gemeinsam in einer Schneidringgarnitur 1 gemäß Figur 1 - montiert werden.

Der Schneidring 2 besteht aus einem rohrförmigen Schneidelement 7 und einem Zentrierring 8, das Schneidelement 7 weist einen mittleren Teil 9 mit konstantem Querschnitt auf. Der vordere Teil 10 des Schneidelements 7 ist in einem Winkel 11 von nicht ganz 12° gegenüber dem mittleren Teil 9 abgeschrägt und läuft in einem elastomeren Dichtelement 12 spitz zu. An der inneren Mantelfläche 13 des Schneidelements 7 sind zwei Schneidkanten 14 ausgebildet. Der hintere Teil 15 des Schneidelements 7 weist eine radial von der äußeren Mantelfläche 16 des mittleren Teils 9 aufsteigende Anlageschulter 17 und eine konische Klemmfläche 18 auf. Der hintere Teil 15 des Schneidelements 7 ist zur Erleichterung der Montage sowie zur Vermeidung von Rohrbeschädigungen durch eine Kerbwirkung mit einer leichten Fase 19 oder Abrundung versehen. Der Zentrierring 8 weist einen rechteckigen Querschnitt 20 auf und ist auf der äußeren Mantelfläche 16 im mittleren Teil 9 des Schneidelements 7 bis zu der Anlageschulter 17 verschiebbar. Der Zentrierring 8 ist an beiden äußeren Kanten 21 gefast, auf seiner äußeren Mantelfläche 22 gummiert und mit vier radial nach außen stehenden Noppen 23 versehen.

Der Aufnahmekörper 6 weist eine Durchgangsbohrung 24 auf, die bis zu einer Anlageschulter 26 auf den Außendurchmesser 27 erweitert ist. An dem Aufnahmekörper 6 ist eine konische Dichtfläche 28 mit einem Winkel 29 von 12° und ein Außengewinde 30 ausgebildet. Die Überwurfmutter 3 weist eine Durchgangsbohrung 31 mit dem Außendurchmesser 27 des Rohrendes 5 und eine gegenüber dieser erweiterte Bohrung 32 mit einem Innengewinde 33 auf. Am Grund 34 der Bohrung 32 ist eine konische Klemmfläche 35 ausgebildet. Die Überwurfmutter 3 ist an ihrer Außenseite 36 mit einem nicht dargestellten Sechskant versehen. Die Maße von Schneidring 2, Aufnahmekörper 6 und Überwurfmutter 3 entsprechen den Vorgaben der Normen ISO 8434-1 und DIN 2353 für Schneidringverbindungen.

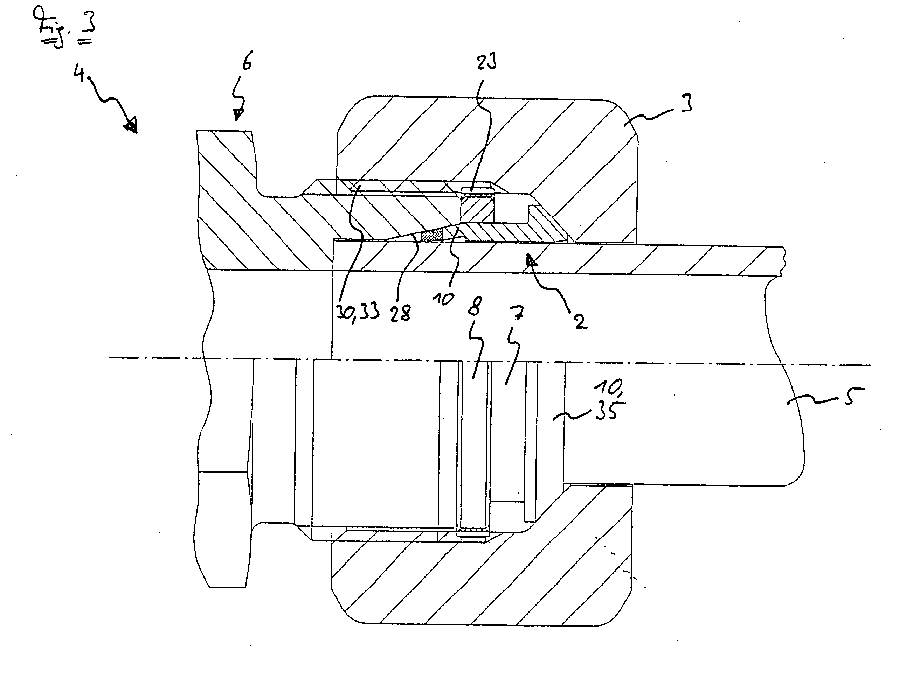

Figur 3 zeigt diese Rohrverbindung 4 im "gefügten" Zustand. Ausgehend von der Situation gemäß Figur 2 wird die Überwurfmutter 3 mit dem Schneidring 2 gegen den Aufnahmekörper 6 geschoben, bis das Innengewinde 33 der Überwurfmutter 3 mit dem Außengewinde 30 des Aufnahmekörpers 6 in Kontakt steht. Wenn Schneidring 2 und Überwurfmutter 3 als getrennte Bauteile zusammengesetzt wurden, wird der Schneidring 2 bereits durch leichten axialen Druck auf die Überwurfmutter 3 in das Innengewinde 33 geschoben. Anschließend wird die Überwurfmutter 3 manuell bis zu einem Punkt angezogen, an dem das Drehmoment erstmals ansteigt. Dann ist der in Figur 3 dargestellte "gefügte" Zustand erreicht: Der Aufnahmekörper 6 und das Schneidelement 7 stehen in der konischen Dichtfläche 28, das Schneidelement 7 und die Überwurfmutter 3 in den Klemmflächen 18, 35 "auf Anschlag". Ein weiteres Anziehen der Überwurfmutter 3 ist nur unter radialer Pressung und Verformung des Schneidelements 7 - mit entsprechend steigendem Anzugsmoment - möglich.

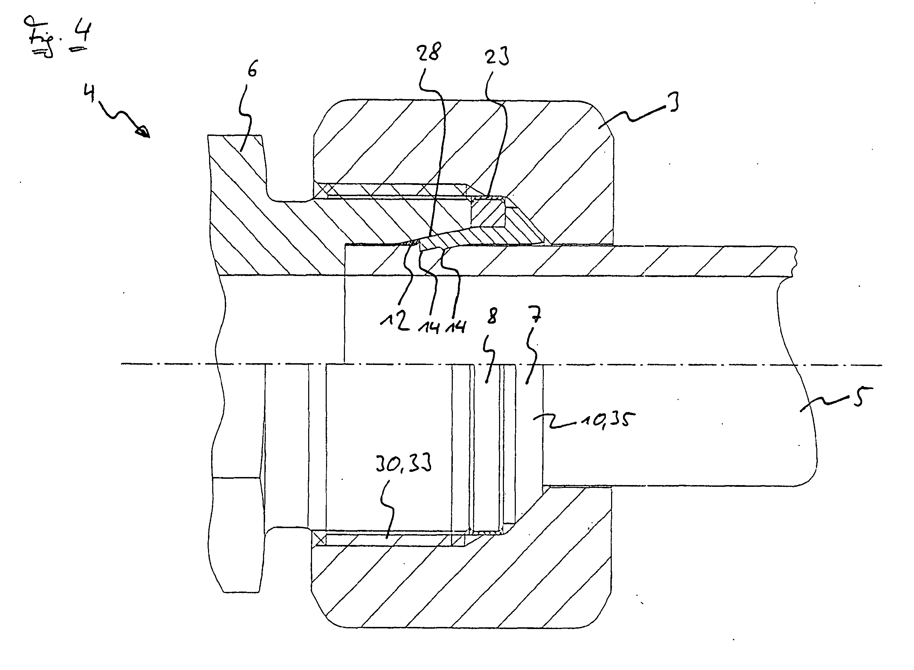

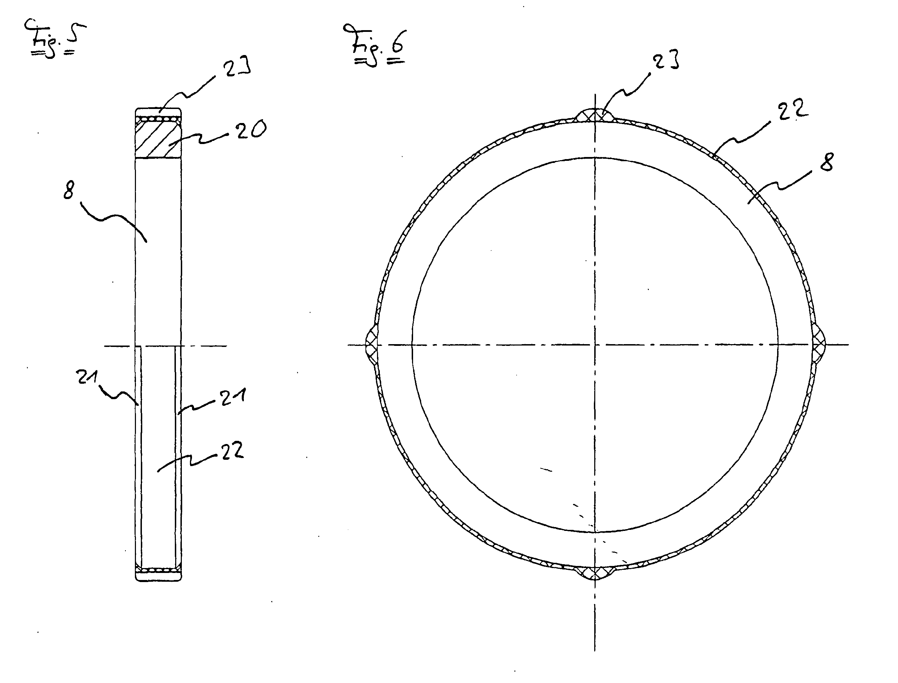

Figur 4 zeigt diese Rohrverbindung 4 im Betriebszustand. Ausgehend von der Situation gemäß Figur 3 wird die Überwurfmutter 3 solange weiter angezogen, bis das Drehmoment erneut steil ansteigt. In der Situation gemäß Figur 4 ist der vordere Teil 10 des Schneidelements 7 unter dem Druck der Dichtfläche 28 des Aufnahmekörpers 6 radial verjüngt. Die Schneidkanten 14 greifen in das Material des Rohrendes 5 ein, das Dichtelement 12 füllt den verbleibenden Zwischenraum vollständig aus. Der Aufnahmekörper 6 hat den Zentrierring 8 auf dem mittleren Teil 9 des Schneidelements 7 bis an die Anlageschulter 17 geschoben, so dass Aufnahmekörper 6, Zentrierring 8, Schneidelement 7 und Überwurfmutter 3 "auf Block" stehen. Ein weiteres Anziehen der Überwurfmutter 3 wäre nur noch unter Zerstörung einer Komponente möglich.

## Patentansprüche

1. Rohrverbindung (4) bestehend aus einem Rohrende (5), einem Aufnahmekörper (6), einer Überwurfmutter (3) und einem zweiteiligen Schneidring (2) mit einem rohrförmigen Schneidelement (7) und einem auf diesem verschiebbaren Zentrierring (8), wobei der Schneidring (2) auf das Rohrende (5) aufschiebbar, mittels des Zentrierrings (8) in der Überwurfmutter (3) zentrierbar und durch Anziehen der Überwurfmutter (3) derart an dem Aufnahmekörper (6) montierbar ist, dass dieser mit dem Rohrende (5) druckfest verbunden ist und wobei der Schneidring (2) und die Überwurfmutter (3) konische Klemmflächen (18, 35) aufweisen, die im montierten Zustand in Kontakt stehen und der Aufnahmekörper (6) eine konische Dichtfläche (28) sowie ein Außengewinde (30), das mit einem Innengewinde (33) der Überwurfmutter (3) zusammenwirkt, aufweist, ***dadurch gekennzeichnet, dass*** das Schneidelement (7) im montierten Zustand an der konischen Dichtfläche (28) des Aufnahmekörpers (6) anliegt und der Teil der äußeren Mantelfläche (16) des Schneidelements (7), auf der der Zentrierring (8) während des Anzichens der überwurfmutter verschoben wird, einen konstanten Durchmesser aufweist.

2. Rohrverbindung (4) nach dem vorgenannten Anspruch, ***dadurch gekennzeichnet, dass*** der größte Durchmesser des Zentrierrings (8) den größten Durchmesser des Schneidelements (7) übersteigt.

3. Rohrverbindung (4) nach dem vorgenannten Anspruch, ***dadurch gekennzeichnet, dass*** die äußere Mantelfläche (22) des Zentrierrings (8) eine Gummierung aufweist.

4. Rohrverbindung (4) nach dem vorgenannten Anspruch, ***dadurch gekennzeichnet, dass*** die Gummierung radial nach außen vorstehende Noppen (23) aufweist.

5. Rohrverbindung (4) nach einem der vorgenannten Ansprüche, ***dadurch gekennzeichnet, dass*** dieser mit einem normgerechten Aufnahmekörper (6) und einer normgerechten Überwurfmutter (3) verwendbar ist.

## Claims

1. A tube connection (4) consisting of a tube end (5), a receiving body (6), a union nut (3) and a two-part cutting ring (2) with a tubular cutting element (7) and a centering ring (8) which is displaceable on the same, with the cutting ring (2) being slideable on the tube end (5), being centerable by means of the centering ring (8) in the union nut (3) and being mountable on the receiving body (6) by tightening the union nut (3) in such a way that the same is joined in a pressure-tight manner with the tube end (5), and with the cutting ring (2) and the union nut (3) comprising conical clamping surfaces (18, 35) which are in contact in the mounted state, and the receiving body (6) comprising a conical sealing surface (28) and an external thread (30) which cooperates with an internal thread (33) of the union nut (3), **characterized in that** in the mounted state the cutting element (7) rests on the conical sealing surface (28) of the receiving body (6) and the portion of the outer jacket surface (16) of the cutting element (7) on which the centering ring (8) is displaced during the tightening of the union nut has a constant diameter.

2. A tube coupling (4) according to the preceding claim, **characterized in that** the largest diameter of the centering ring (8) exceeds the largest diameter of the cutting element (7).

3. A tube coupling (4) according to the preceding claim, **characterized in that** the outer jacket surface (22) of the centering ring (8) comprises a rubber coating.

4. A tube coupling (4) according to the preceding claim, **characterized in that** the rubber coating comprises outwardly projecting knobs (23).

5. A tube coupling (4) according to the preceding claims, **characterized in that** the same can be used with a receiving body (6) conforming to standards and a union nut (3) conforming to standards.

## Revendications

1. Raccord de tuyau (4) composé d'une extrémité de tuyau (5), d'un corps récepteur (6), d'un écrou à raccord (3) et d'une bague de sertissage (2) en deux parties avec un élément de sertissage tubulaire (7) et une bague de centrage (8) mobile en coulissement sur celui-ci, la bague de sertissage (2) étant apte à être glissée sur l'extrémité de tuyau (5), à être centrée dans l'écrou à raccord (3) au moyen de la bague de centrage (8) et à être montée sur le corps récepteur (6) par serrage de l'écrou à raccord (3) de manière à ce que celui-ci soit relié à l'extrémité de tuyau (5) par une liaison résistante à la pression, la bague de sertissage (2) et l'écrou à raccord (3) comportant des surfaces de serrage (18, 35) coniques qui se touchent à l'état assemblé et le corps récepteur (6) comportant une surface d'étanchéité (28) conique et un filetage extérieur (30) qui coopère avec un filetage intérieur (33) de l'écrou raccord à (3), du type ***caractérisé en ce que**,* à l'état assemblé, l'élément de sertissage (7) est en appui sur la surface d'étanchéité (28) conique du corps récepteur (6) *et que* la partie de la surface latérale extérieure (16) de l'élément de sertissage (7) sur laquelle on fait coulisser la bague de centrage (8) pendant le serrage de l'écrou à raccord (3) présente un diamètre constant.

2. Raccord de tuyau (4) selon la revendication précédente, ***caractérisé en ce que*** le plus grand diamètre de la bague de centrage (8) est supérieur au plus grand diamètre de l'élément de sertissage (7).

3. Raccord de tuyau (4) selon la revendication précédente, ***caractérisé en ce que*** la surface latérale extérieure (22) de la bague de centrage (8) comporte un caoutchoutage.

4. Raccord de tuyau (4) selon la revendication précédente, ***caractérisé en ce que*** le caoutchoutage comporte des tétons (23) faisant saillie radialement vers l'extérieur.

5. Raccord de tuyau (4) selon l'une quelconque des revendications précédentes, ***caractérisé en ce que*** celui-ci est apte à être utilisé avec un corps récepteur (6) et un écrou à raccord (3) normalisés.
